# EUROPÄISCHE PATENTANMELDUNG

(11) **EP 2 623 938 A1**
(43) Veröffentlichungstag der Anmeldung: **07.08.2013**
(21) Anmeldenummer: 12153819.3
(22) Anmeldetag: 03.02.2012
(51) Int. Cl.: G01D 5/38

(54) **Messwertgeber zum Erhalt einer Positionsinformation**

(71) Anmelder: Siemens Aktiengesellschaft, 80333 München (DE)
(72) Erfinder: Eckert, Rainer, 97616 Bad Neustadt / Herschfeld (DE); Schwesig, Günter, 91054 Erlangen (DE)

(57) **Zusammenfassung**

Die Erfindung betrifft einen Messwertgeber (16) zum Erhalt einer Positionsinformation, wobei mit einer Sende-/Empfangseinheit (18) eine Maßverkörperung (12, 14) abgetastet wird und wobei die Maßverkörperung (12, 14) diffraktiv wirkende mikrostrukturierte Felder umfasst, wobei sich der Messwertgeber (16) dadurch auszeichnet, dass die Sende-/Empfangseinheit (18) zumindest eine Strahlquelle (20) zum Erzeugen eines Abtaststrahls (22) und zumindest zwei Detektoren (24, 26) zum Erfassen eines optischen Codes (28) umfasst, wobei sich der optische Code (28) aufgrund des Abtaststrahls (22) und einer Reflektion oder Transmission an der Maßverkörperung (12, 14) ergibt.

## Beschreibung

Die Erfindung betrifft einen Messwertgeber zum Erhalt einer Positionsinformation. Solche Messwertgeber sind an sich bekannt. Exemplarisch kann auf sogenannte Inkrementalgeber verwiesen werden.

Der hier zu beschreibende Messwertgeber basiert auf einer optischen Abtastung einer Maßverkörperung. Dies ist zum Beispiel bei Inkrementalgebern ebenfalls bekannt.

Die EP 1 677 081 B1 schlägt die Verwendung einer diffraktiv wirkenden Maßverkörperung für einen Messwertgeber zum Erhalt einer Positionsinformation vor.

Noch nicht ganz optimal ist die Eignung solcher Messwertgeber für den industriellen Einsatz, speziell wenn es darum geht, besondere Sicherheitsanforderungen zu erfüllen.

Eine Aufgabe der Erfindung besteht entsprechend darin, einen auf einer Verwendung einer diffraktiv wirkenden Maßverkörperung basierenden Messwertgeber derart fortzubilden, dass auch die Erfüllung höherer Sicherheitsanforderungen möglich ist.

Diese Aufgabe wird erfindungsgemäß mit den Merkmalen des Anspruchs 1 gelöst. Dazu ist bei einem Messwertgeber zum Erhalt einer Positionsinformation, wobei mit einer Sende-/Empfangseinheit eine Maßverkörperung abgetastet wird und wobei die Maßverkörperung diffraktiv wirkende mikrostrukturierte Felder umfasst, vorgesehen, dass die Sende-/Empfangseinheit zumindest eine Strahlquelle zum Erzeugen eines Abtaststrahls und zumindest zwei Detektoren zum Erfassen eines optischen Codes umfasst, wobei sich der optische Code aufgrund des Abtaststrahls und einer Reflektion oder Transmission an der Maßverkörperung ergibt.

Der Vorteil der Erfindung besteht darin, dass ein Messwertgeber mit zwei Detektoren zur Erfassung der Positionsinformation für einen höheren Sicherheitsintegritätslevel in Betracht kommt, als ein Messwertgeber mit nur einem derartigen Detektor. Bei zumindest zwei Detektoren ergeben sich intern im Messwertgeber auch zwei interne Positionsinformationen. Diese können zum Beispiel miteinander verglichen werden, so dass nur bei einer Übereinstimmung oder bei einer zumindest ausreichenden Übereinstimmung eine der internen Positionsinformationen oder ein Mittelwert der internen Positionsinformationen als extern abgreifbares Positionsinformationssignal ausgegeben wird.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Messwertgebers ist vorgesehen, dass mit einem ersten Detektor der zumindest zwei Detektoren der aufgrund des Abtaststrahls resultierende optische Code und mit einem zweiten Detektor der zumindest zwei Detektoren eine höhere Beugungsordnung des optischen Codes erfassbar ist. Die zumindest zwei Detektoren sind damit nicht nur redundant, sondern hinsichtlich des erfassten Signals auch diversitär ausgeführt, denn es werden zwei verschiedene Signale erfasst, anhand derer sich jeweils die Positionsinformation ergibt.

Bei einer alternativen oder zusätzlichen Ausführungsform des Messwertgebers ist vorgesehen, dass mit einem ersten Detektor der zumindest zwei Detektoren der aufgrund des Abtaststrahls resultierende optische Code und mit einem zweiten Detektor der zumindest zwei Detektoren ein konjugierter optischer Code erfassbar ist. Auch hier sind die zumindest zwei Detektoren nicht nur redundant, sondern hinsichtlich des erfassten Signals auch diversitär ausgeführt, denn es werden zwei verschiedene Signale erfasst, anhand derer sich jeweils die Positionsinformation ergibt. Zudem handelt es sich bei dem konjugierten optischen Code auch noch um ein Signal, das eine andere Bearbeitung erfordert als der eigentliche optische Code. Damit ist auch die Verarbeitung des aufgenommenen Signals diversitär. Zudem ergeben sich bei einem ersten Detektor und bei zumindest zwei zweiten Detektoren intern zumindest drei interne Positionsinformationen. Diese können miteinander verglichen werden, so dass nur bei einer Übereinstimmung oder bei einer zumindest ausreichenden Übereinstimmung eine der internen Positionsinformationen oder ein Mittelwert der internen Positionsinformationen als extern abgreifbares Positionsinformationssignal ausgegeben wird. Alternativ ist möglich, dass intern ein so genanntes voting erfolgt, so dass zumindest zwei interne Positionsinformationen übereinstimmen oder innerhalb vorgegebener oder vorgebbarer Grenzen übereinstimmen müssen, damit auf deren Basis ein extern abgreifbares Positionsinformationssignal ausgegeben wird.

Dies lässt sich auch kombinieren, indem ein Messwertgeber einen ersten Detektor und zwei zweite Detektoren umfasst. Der erste Detektor erfasst den optischen Code und die beiden zweiten Detektoren erfassen jeweils eine höhere Beugungsordnung des optischen Codes bzw. einen konjugierten optischen Code.

Der Vorteil der oben beschriebenen Ausführungsformen des Messwertgebers mit zumindest zwei Detektoren, bei denen der Messwertgeber mit einem entsprechenden Detektor zumindest auch eine höhere Beugungsordnung des optischen Codes und/oder einen konjugierten optischen Code erfasst, liegt vor allem in der aufgrund der oben skizzierten Diversität erreichbaren höheren funktionalen Sicherheit, einem höheren Sicherheitsintegritätslevel (SIL).

Hinsichtlich der Ausführung des oder jedes Detektors kommt in Betracht, dass der erste und der zweite Detektor Abschnitte desselben CCD-Sensors sind. Dann sind nur ein derartiger Sensor und nur eine Elektronik für dessen Ansteuerung erforderlich. Indem einzelne und sich wechselseitig nicht überlappende Abschnitte des CCD-Sensors als Detektoren fungieren, kann ein in einem ersten derartigen Abschnitt aufgenommenes Bild als Positionsinformation von dem ersten Detektor und ein in einem zweiten derartigen Abschnitt aufgenommenes Bild als Positionsinformation von dem zweiten Detektor ausgewertet werden.

Der Messwertgeber wie hier und im Folgenden beschrieben kommt besonders zur Verwendung an oder mit einer Antriebseinheit, zum Beispiel einer Antriebseinheit für eine Werkzeugmaschine, einen Roboter oder dergleichen, in Betracht, so dass die Erfindung insoweit auch eine Antriebseinheit mit einem solchen Messwertgeber betrifft.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: einen Messwertgeber zum Erhalt einer Positionsinformation und
- FIG 2: ein Beispiel für ein resultierendes Bild, wenn mit dem Messwertgeber gemäß FIG 1 eine diffraktiv wirkende und mikrostrukturierte Felder umfassende Maßverkörperung abgetastet wird.

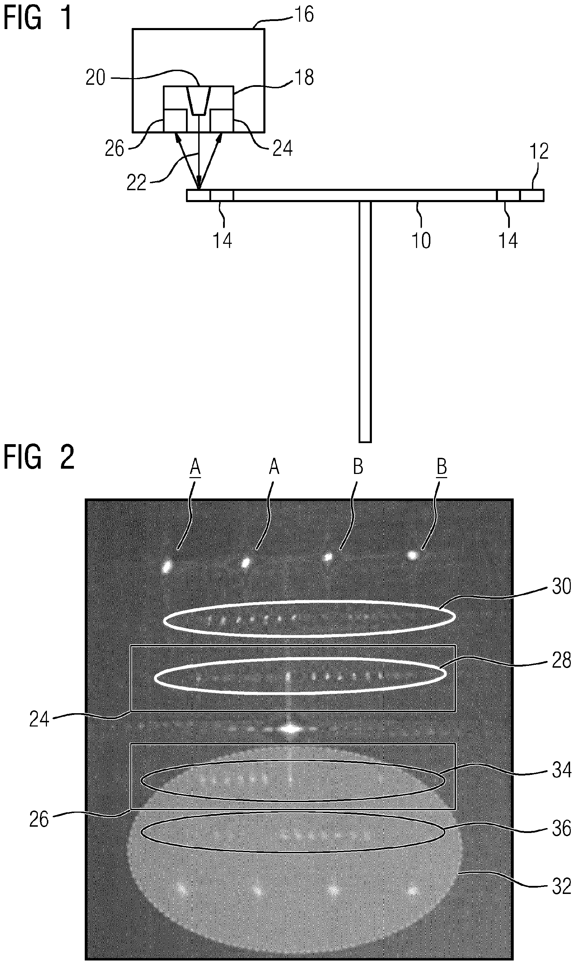

FIG 1 zeigt schematisch vereinfacht eine drehbare Scheibe 10 mit einer Maßverkörperung. Als Maßverkörperung sind - ebenfalls nur schematisch vereinfacht - eine Absolutspur 12 und eine Inkrementalspur 14 gezeigt. Die Maßverkörperung, also die Absolutspur 12 und/oder die Inkrementalspur 14, wird mit einem hier und im Folgenden auch nur kurz als Messwertgeber 16 bezeichneten Messwertgeber zum Erhalt einer Positionsinformation abgetastet. Gezeigt ist dies für eine Abtastung der Inkrementalspur 14.

Der Messwertgeber 16 umfasst zum Erhalt einer Positionsinformation eine Sende-/Empfangseinheit 18. Mit dieser wird die jeweilige Maßverkörperung 12, 14 abgetastet. Dazu umfasst die Sende-/Empfangseinheit 18 zumindest eine Strahlquelle 20 zum Erzeugen eines Abtaststrahls 22, also insbesondere zum Erzeugen eines Laserstrahls. Damit sich der Messwertgeber 16 für höhere Sicherheitsanforderungen eignet, umfasst dieser zumindest zwei Detektoren 24, 26 zum Erfassen eines optischen Codes 28 (FIG 2). Dieser ergibt sich aufgrund des Abtaststrahls 22 und einer Reflektion oder Transmission an der jeweiligen Maßverkörperung 12, hier also der Absolutspur 12.

In FIG 1 ist insoweit eine Situation dargestellt, die darauf basiert, dass der Abtaststrahl 22 reflektiert wird. Deshalb befinden sich die Strahlquelle 20 und die zumindest zwei Detektoren 24, 26 auf der selben Seite der Maßverkörperung 12, 14. Genauso ist denkbar, dass der Abtaststrahl 22 nicht reflektiert, sondern transmittiert wird, so dass sich der optische Code 28 bei einem jedem zu dessen Erfassung vorgesehenen und der Strahlquelle 20 gegenüberliegend angeordneten Detektor 24, 26 ergibt.

FIG 2 zeigt ein sich aufgrund der Abtastung der Maßverkörperung 12, 14 mit dem Abtaststrahl 22 ergebendes Bild. Dieses kann zum Beispiel mit einem CCD-Sensor aufgenommen werden. Das Bild umfasst den optischen Code 28, also das Resultat einer Beugung erster Ordnung des Abtaststrahls 22 an der diffraktiv wirkenden, mikrostrukturierten Maßverkörperung 12, 14. Das Bild umfasst des Weiteren eine höhere Beugungsordnung 30 des optischen Codes. Diese wird in der Fachterminologie mitunter auch als "Dump" oder "Dump Row" bezeichnet. Schließlich umfasst das Bild auch konjugierte Resultate 32 der Diffraktion, nämlich einen konjugierten optischen Code 34 und eine höhere Beugungsordnung des konjugierten optischen Codes 36. Sowohl die Dump Row wie auch die konjugierten optischen Codes 34, 36 umfassen eine Positionsinformation, wie sie auch in dem optischen Code 28 enthalten ist. Dies ist der Grund, warum es zum Erhalt eines höheren Sicherheitslevels möglich ist, neben dem optischen Code 28 eine solche Dump Row oder konjugierte optische Codes 34, 36 auszuwerten.

In FIG 2 ist darüber hinaus schematisch vereinfacht für den ersten und zweiten Detektor 24, 26 (FIG 1) jeweils dessen Erfassungsbereich dargestellt und jeweils mit der entsprechenden Bezugsziffer bezeichnet. Für die Realisierung der zumindest zwei Detektoren 24, 26 kommt entsprechend in Betracht, dass als erster und zweiter Detektor 24, 26 Abschnitte desselben CCD-Sensors fungieren, wobei sich Position und Ausdehnung dieser Abschnitte aus dem erwarteten Ort der mit dem jeweiligen Sensor 24, 26 zu erfassenden optischen Codes 28, 30, 34, 36 ergeben. Genauso kommt in Betracht, zwei oder mehr CCD-Sensoren mit jeweils einer geringeren Anzahl optisch sensitiver Elemente oder zwei oder mehr CCD-Zeilensensoren vorzusehen und diese als ersten und zweiten Sensor im Strahlengang des zu erfassenden optischen Codes 28, 30, 34, 36 zu positionieren.

In der Darstellung in FIG 2 ist oberhalb des optischen Codes in der höheren Beugungsordnung 30 noch ein mit den üblichen Bezeichnungen A, A, B, B versehenes Signalmuster, wie sich dieses bei einer Abtastung der Inkrementalspur 14 ergibt, gezeigt. Auch dieses Signalmuster kann redundant erfasst werden, zum Beispiel indem mit einem ersten Detektor das Signalmuster und mit einem zweiten Detektor des konjugierte Signalmuster (unten im Bereich der konjugierten Resultate 32 gezeigt) erfasst wird. Des Weiteren kommt in Betracht, dass sowohl der sich bei der Abtastung der Absolutspur 12 ergebende optische Code 28-36 und ein Signalmuster oder das Signalmuster und das konjugierte Signalmuster, das bzw. die sich bei der Abtastung der Inkrementalspur 14 ergeben, mit einem Sensor erfasst werden.

Unabhängig davon kann eine Redundanz/Diversität auch erreicht werden, indem zumindest zwei Messwertgeber mit jeweils mindestens einem Detektor verwendet werden. Eine weitere Alternative besteht darin, einen Messwertgeber mit mindestens einem Detektor mit einem vorhandenen, hochwertigen Gebersystem zu kombinieren. Hier kommt auch in Betracht, ein solches vorhandenes und hochwertiges Gebersystem mit einem Messwertgeber 16 wie vorstehend beschrieben zu kombinieren.

## Patentansprüche

1. Messwertgeber (16) zum Erhalt einer Positionsinformation, wobei mit einer Sende-/Empfangseinheit (18) eine Maßverkörperung (12, 14) abgetastet wird, wobei die Maßverkörperung (12, 14) diffraktiv wirkende mikrostrukturierte Felder umfasst, **dadurch gekennzeichnet, dass** die Sende-/Empfangseinheit (18) zumindest eine Strahlquelle (20) zum Erzeugen eines Abtaststrahls (22) und zumindest zwei Detektoren (24, 26) zum Erfassen eines optischen Codes (28) umfasst, wobei sich der optische Code (28) aufgrund des Abtaststrahls (22) und einer Reflektion oder Transmission an der Maßverkörperung (12, 14) ergibt.

2. Messwertgeber nach Anspruch 1, wobei mit einem ersten Detektor (24) der zumindest zwei Detektoren (24, 26) der aufgrund des Abtaststrahls (22) resultierende optische Code (28) und mit einem zweiten Detektor (26) der zumindest zwei Detektoren (24, 26) eine höhere Beugungsordnung (30) des optischen Codes (28) erfassbar ist.

3. Messwertgeber nach Anspruch 1, wobei mit einem ersten Detektor (24) der zumindest zwei Detektoren (24, 26) der aufgrund des Abtaststrahls (22) resultierende optische Code (28) und mit einem zweiten Detektor (26) der zumindest zwei Detektoren (24, 26) ein konjugierter optischer Code (34, 36) erfassbar ist.

4. Messwertgeber nach Anspruch 2 und 3, wobei mit dem ersten Detektor (24) der resultierende optische Code (28) und mit zwei zweiten Detektoren (26) einerseits eine höhere Beugungsordnung (30) des optischen Codes (28) und andererseits ein konjugierter optischer Code (34, 36) erfassbar ist.

5. Messwertgeber nach Anspruch 2 oder 3, wobei der erste und zweite Detektor (24, 26) Abschnitte desselben CCD-Sensors sind.

6. Antriebseinheit mit einem Messwertgeber (16) nach einem der vorangehenden Ansprüche.

## Geänderte Patentansprüche

### Geänderte Patentansprüche gemäss Regel 137(2) EPÜ.

**1.** Messwertgeber (16) zum Erhalt einer Positionsinformation,
wobei mit einer Sende-/Empfangseinheit (18) eine Maßverkörperung (12, 14) abgetastet wird,
wobei die Maßverkörperung (12, 14) diffraktiv wirkende mikrostrukturierte Felder umfasst,
wobei die Sende-/Empfangseinheit (18) zumindest eine Strahlquelle (20) zum Erzeugen eines Abtaststrahls (22) und zumindest zwei Detektoren (24, 26) oder als zwei einzelne Detektoren fungierende Abschnitte desselben CCD-Sensors zum Erfassen eines optischen Codes (28) umfasst,
wobei sich der optische Code (28) aufgrund des Abtaststrahls (22) und einer Reflektion oder Transmission an der Maßverkörperung (12, 14) ergibt,
**dadurch gekennzeichnet,**
**dass** von jedem der mindestens zwei Detektoren (24, 26) ein optischer Code (28) erfassbar und auf Basis des jeweils erfassten optischen Codes (28) eine interne Positionsinformation erhältlich ist und
**dass** nur bei einer Übereinstimmung oder bei einer zumindest ausreichenden Übereinstimmung eine der internen Positionsinformationen oder ein Mittelwert der internen Positionsinformationen als extern abgreifbares Positionsinformationssignal ausgebbar ist.

**2.** Messwertgeber nach Anspruch 1, wobei mit einem ersten Detektor (24) der zumindest zwei Detektoren (24, 26) der aufgrund des Abtaststrahls (22) resultierende optische Code (28) und mit einem zweiten Detektor (26) der zumindest zwei Detektoren (24, 26) eine höhere Beugungsordnung (30) des optischen Codes (28) erfassbar ist.

**3.** Messwertgeber nach Anspruch 1, wobei mit einem ersten Detektor (24) der zumindest zwei Detektoren (24, 26) der aufgrund des Abtaststrahls (22) resultierende optische Code (28) und mit einem zweiten Detektor (26) der zumindest zwei Detektoren (24, 26) ein konjugierter optischer Code (34, 36) erfassbar ist.

**4.** Messwertgeber nach Anspruch 2 und 3, wobei mit dem ersten Detektor (24) der resultierende optische Code (28) und mit zwei zweiten Detektoren (26) einerseits eine höhere Beugungsordnung (30) des optischen Codes (28) und andererseits ein konjugierter optischer Code (34, 36) erfassbar ist.

**5.** Antriebseinheit mit einem Messwertgeber (16) nach einem der vorangehenden Ansprüche.
